# EUROPEAN PATENT SPECIFICATION

(11) **EP 4 380 716 B1**
(45) Date of publication and mention of the grant of the patent: **08.10.2025**
(21) Application number: 22755181.9
(22) Date of filing: 26.07.2022
(51) Int. Cl.: B01D 53/04, B01D 53/26, F04B 39/16

(54) **REGENERATION MEANS AND DRYING DEVICE FOR DRYING COMPRESSED GAS**
REGENERATIONSMITTEL UND TROCKNUNGSVORRICHTUNG ZUM TROCKNEN VON DRUCKGAS
MOYEN DE RÉGÉNÉRATION ET DISPOSITIF DE SÉCHAGE POUR LE SÉCHAGE DE GAZ COMPRIMÉ

(30) Priority: 03.08.2021 BE 202105615; 08.07.2022 BE 202205558
(43) Date of publication of application: 12.06.2024
(73) Proprietor: ATLAS COPCO AIRPOWER, naamloze vennootschap, 2610 Wilrijk (BE)
(72) Inventor: HERMANS, Hans Maria Karel, 2610 (BE)
(74) Representative: Van Minnebruggen, Ewan Benito Agnes
(86) International application number: PCT/EP2022/070929
(87) International publication number: WO 2023/011984

(56) References cited:
- EP-A1- 3 075 433
- WO-A1-2021/137127
- CN-A- 105 688 617
- CN-U- 204 911 174

## Description

The present invention relates to regeneration means for drying compressed gas.

More specifically, the invention is intended to be applied in a drying device for drying gas to increase the efficiency thereof and to make such drying device less dependent on the environmental parameters and more dependable.

Devices for drying compressed gas are already known, which are provided with an inlet for compressed gas to be dried and an outlet for dried compressed gas, wherein the drying device comprises at least two vessels containing a regenerable drying agent and a controllable valve system consisting of a first valve block and a second valve block connecting said inlet and said outlet, respectively, to said vessels, wherein the controllable valve system is configured such that at least one vessel can dry compressed gas while the other vessel is being regenerated and cooled, and that by control of the valve system, the vessels each in turn can dry compressed gas. WO2021/137127 A1 discloses such a drying devices.

By regenerable drying agent herein is meant a drying agent or desiccant which can absorb moisture from a gas by adsorption and which, when saturated with moisture, can be dried by passing a so-called regeneration gas through it. This process is also known as drying agent regeneration. The regeneration gas is typically a hot gas.

Although the principle of adsorption is mentioned here, the invention is also applicable to the principle of absorption.

When a vessel will dry, it will absorb moisture from the compressed gas to be dried, saturating the drying agent. This means that it can absorb little or no additional moisture.

Subsequently, this vessel is then regenerated, wherein typically a hot gas, said regeneration gas, for example hot air, is passed through it. This hot gas will extract moisture from the drying agent and regenerate it.

Subsequently, the vessel can optionally be cooled first before being used again to dry compressed gas. After regeneration, the drying agent will have heated up. By first cooling the drying agent in a vessel before using this vessel again for drying, the drying agent will be able to extract moisture more efficiently.

In order to be able to provide for the regeneration of a vessel, devices are already known which are provided with a first regeneration line that is provided with heating means, said regeneration line being provided for supplying a regeneration gas to the vessel that is being regenerated, wherein the first regeneration line connects to the second valve block, and with a second regeneration line for the discharge of saturated regeneration gas which connects to the first valve block, wherein the first and the second regeneration line, respectively, can be connected to the outlet of a blower or the like for the supply of ambient air, respectively to a blow-off opening or vice versa.

When a vessel is being regenerated, the first regeneration line will be connected to said blower and the second regeneration line to said blow-off opening.

Said blower will be able to supply ambient air which is heated by means of said heating means before being transferred via the second valve block to the vessel being regenerated.

After passing through the vessel that is being regenerated, the saturated regeneration air will leave the device via said second regeneration line and the blow-off opening.

Subsequently, this regenerated vessel is first cooled.

To this aim, the first regeneration line is connected to the blow-off opening and the second regeneration line to said blower.

The blower will now pass a cooling gas through the second regeneration line and then through the regenerated vessel, wherein the drying agent is cooled by means of the cooling gas.

This cooling gas will leave the device via the first regeneration line and the blow-off opening.

A drawback of such devices is that they require a relatively high temperature of the regeneration gas and thus of the heating means, such that they consume relatively much energy.

This is a result of the use of ambient air for regeneration, as a result of which this air will always contain moisture, such that the regeneration will not be optimal unless the ambient air is heated very strongly.

In addition, the device is dependent on the environmental parameters as ambient air is used for regeneration and cooling.

The present invention aims to provide a solution to at least one of the aforementioned and other drawbacks.

The present invention involves regeneration means for regenerating a drying agent in a drying device for compressed gas, which regeneration means comprise a regeneration line connected to a regeneration inlet of the drying device, which regeneration line connects said regeneration inlet to an outlet of a blower for the supply of a regeneration gas, and wherein heating means are provided between the outlet of said blower and the regeneration inlet for heating the regeneration gas, characterised in that between the outlet of said blower, on the one hand, and said heating means, on the other hand, an additional vessel with drying agent is provided for drying the regeneration gas.

An advantage is that, during regeneration of the drying agent in the drying device, the regeneration gas, usual ambient air, will pass through the additional vessel before being heated up.

All (ambient) moisture will be extracted from the regeneration gas by the drying agent in the additional vessel such that regeneration can be done using this completely dry ambient air. This will ensure a more efficient regeneration. An additional advantage of this is that the regeneration gas has to be heated less strongly, such that the heating means can be set at a lower temperature and at least temporarily use a smaller power.

Typically, this will be, for example, a reduction of 30 to 40°C relative to the known devices.

It is therefore also possible to provide more compact heating means since less heating capacity will be required.

The regenerating means are further provided with a valve system configured such that it is able to connect the outlet of the blower to a cooling line connected to a cooling inlet of said drying device.

By means of said cooling line, a cooling gas is supplied to the drying device to cool the drying agent in the drying device, wherein the cooling gas, after passing through the drying agent in the drying device, exists the drying device via said regeneration line.

Another advantage is that, when the drying agent in the drying device after regeneration is subsequently cooled, the heat from that regenerated drying agent will be transported via the cooling gas to the additional vessel, and the drying agent in the additional vessel will regenerate in the process.

Moreover, the heat will, as it were, be temporarily stored in this additional vessel, meaning that the additional vessel is heated.

When drying agent in the drying device is regenerated during a subsequent cycle, the ambient air drawn in by the blower will not only be dried by the additional vessel, but will also be heated up for a certain time.

Moreover, in this additional vessel, heat will be released through adsorption. This is also called 'heat of adsorption' and is comparable to heat of condensation.

Typically, this will amount to, for example, an increase of 10°C relative to the known devices.

For clarity, it is explicitly stated here that it is possible that the drying agent in the additional vessel is the same drying agent as the drying agent in the drying device, but it may also be a different drying agent.

Said cooling line connects via said valve system to the regeneration line at a location between the outlet of said blower, on the one hand, and said additional vessel, on the other hand.

In a practical embodiment, the additional vessel is thermally insulated.

This thermal insulation may, for example, take the form of an insulating coating on the inside and/or outside of the additional vessel and/or of a layer of insulating material with which the additional vessel is packed.

An advantage of this is that the heat ending up temporarily in the additional vessel during the cooling phase is stored as optimally as possible.

The invention also relates to a drying device for drying compressed gas, which device is provided with an inlet for compressed gas to be dried and an outlet for dried compressed gas, wherein the device comprises at least two vessels containing a regenerable drying agent and a controllable valve device consisting of a first valve block and a second valve block connecting said inlet and said outlet, respectively, to said vessels, wherein the controllable valve device is configured such to allow at least one vessel compressed gas to dry, while the other vessel is being regenerated and cooled, and that by controlling the valve device, the vessels can each in turn dry compressed gas, characterized in that the device is further provided with regeneration means according to the invention, wherein the regeneration line is connected to the second valve block to connect the regeneration line to a regeneration inlet of the drying device.

The advantages of such a drying device are similar to the advantages of the regenerating agents according to the invention.

Preferably, the cooling line is connected to the first valve block for connecting the cooling line to a cooling inlet of the drying device.

According to a preferred feature of the invention, the internal volume of the additional vessel is smaller than the internal volumes of each of said at least two vessels.

This will ensure that the entire volume of the drying agent in the additional vessel is always fully regenerated during cooling, thus preventing any moisture remaining in the additional vessel at the start of the regeneration process.

In order to better demonstrate the features of the invention, some preferred embodiments of regeneration means and a drying device for drying compressed gas according to the invention are described below, by way of example without any limiting character, with reference to the accompanying drawings, in which:
Figure 1 schematically represents a drying device according to the invention for drying compressed gas, provided with regeneration means according to the invention;
Figure 2 represents the drying device of Figure 1, but in a different position.

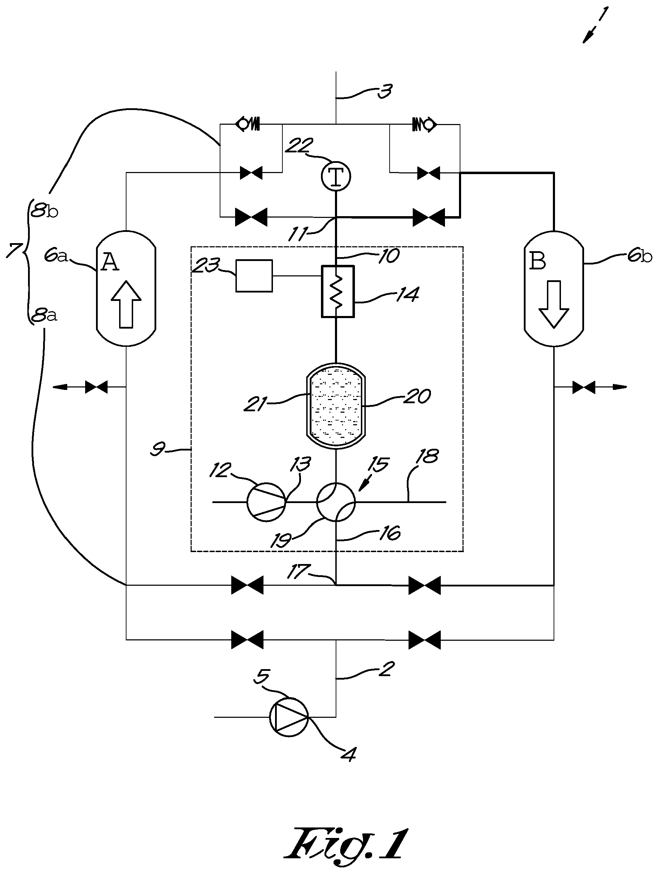

The drying device for drying compressed gas 1, shown in Figure 1, comprises an inlet 2 for compressed gas to be dried and an outlet 3 for dried compressed gas.

In the example of Figure 1, the inlet 2 is connected to the outlet 4 of a compressor 5.

The drying device 1 further comprises two vessels 6a, 6b containing a regenerable drying agent.

It is not excluded for the invention that the device 1 contains more than two such vessels 6a, 6b.

Furthermore, the device 1 comprises a controllable valve device 7 consisting of a first valve block 8a and a second valve block 8b.

The first valve block 8a will connect the vessels 6a, 6b to said inlet 2 for compressed gas to be dried, while the second valve block 8b will connect the vessels 6a, 6b to said outlet 3 for dried compressed gas.

Said valve blocks 8a, 8b are a system of different pipes and valves which can be controlled in such a way that at least one vessel 6a, 6b is regenerated and subsequently cooled, while the other vessel 6a, 6b or the other vessels 6a, 6b dry the compressed gas, whereby by controlling the valve device 7 the vessels 6a, 6b each in turn will dry compressed gas.

According to the invention, the device 1 further comprises regeneration means 9 according to the invention.

According to the invention, these regeneration means 9 comprise a regeneration line 10.

This regeneration line 10 is connected to a regeneration inlet 11 of the drying device 1.

The regeneration line 10 is connected to the second valve block 8b. Hence, the regeneration inlet 11 is located at the location of this second valve block 8b.

Via this regeneration inlet 11, a regeneration gas can be supplied into the drying device 1.

Via this regeneration line 10 and the regeneration inlet 11, a regeneration gas can be supplied to the vessel 6a, 6b which is being regenerated.

In addition, the regeneration means 9 are provided with a blower 12 which is connected with its outlet 13 by means of the regeneration line 10 to the regeneration inlet 11. A supply of regeneration gas can be provided via the blower 12, whereby the blower 12 will draw in ambient air. Of course, it is not excluded that, instead of a blower 12, other means are provided for drawing in ambient air.

Between the outlet 13 of the blower 12 and the regeneration inlet 11, heating means 14 are provided in the regeneration line 10 in order to be able to heat up the regeneration gas before entering and passing through the vessel 6a, 6b that is being regenerated.

In this case, these heating means 14 comprise an electrical heating system, but it is not excluded that they comprise a steam heater or a heat exchanger incorporated in the regeneration line 10.

The heating means 14 may also comprise a heat exchanger which uses the heat of compression of the compressor 5 to heat up the regeneration gas.

In the illustrated example of Figure 1, the regenerating means are further provided with a valve system 15 configured such that it is able to connect the outlet 13 of the blower 12 with a cooling line 16 which is connected to a cooling inlet 17 of the drying device 1.

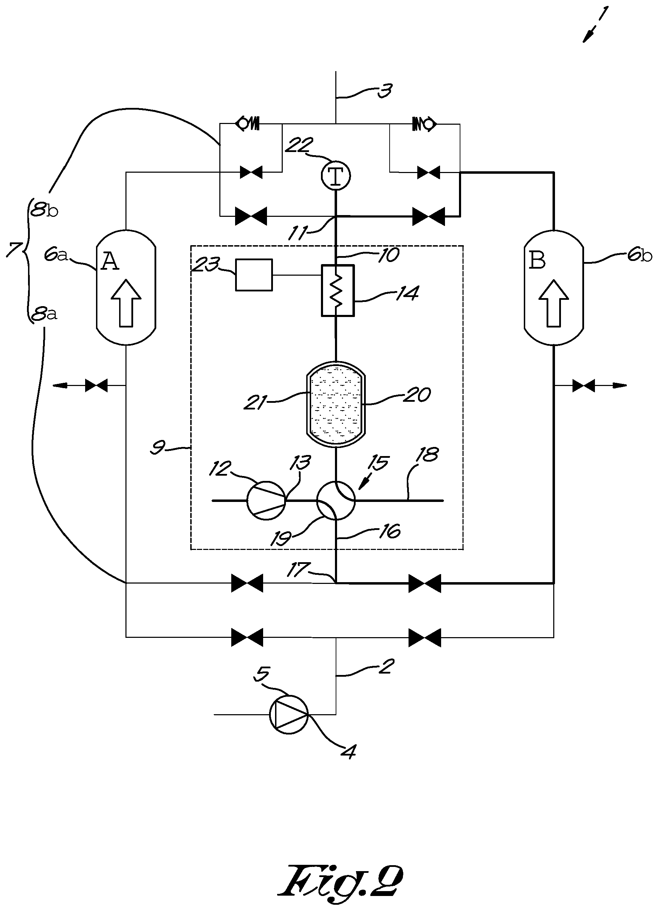

Reference is also made here to Figure 2, in which the valve system 15 realizes said connection.

In this case, the cooling line 16 is connected to the first valve block 8a. Hence, the cooling inlet 17 is located at the location of the first valve block 8a.

Via this cooling inlet 17, a cooling gas can be supplied into the drying device 1, as shown in Figure 2.

Via this cooling line 16 and the cooling inlet 11, a regeneration gas can be supplied to the vessel 6a, 6b that is being regenerated.

The regeneration line 10 and the cooling line 16 are each connected to a different valve block 8a, 8b.

The valve system 15 is configured such that it is able to connect the regeneration line 10, respectively the cooling line 16, with the outlet 13 of the blower 12, respectively with a blow-off opening 18, or vice versa.

Either the regeneration line 10 is connected to an outlet 13 of a blower 12 and the cooling line 16 to a blow-off opening 18 or vice versa, i.e. the cooling line 16 is connected to an outlet 13 of a blower 12 and the regeneration line 10 to the blow-off opening 18.

Note that the above operation means that, in the case of Figure 1, the cooling inlet 17 will act, as it were, as a regeneration outlet and vice versa, in the case of Figure 2, the regeneration inlet 11 will act, as it were, as a cooling outlet.

Although it is possible to provide a blower 12 and a blow-off opening 18 for both the regeneration line 10 and the cooling line 16 and switching means for switching between the two, in the example of Figure 1, it has been chosen to provide the device 1 with the valve system 15 as a four-way valve 19 in order to realize a more compact design.

However, such a compact valve system 15 does not necessarily have to be equipped with a four-way valve 19.

The valve system 15 preferably comprises one or more of the following components:
- four-way valve (19);
- three-way valve;
- butterfly valve;
- on/off valve.

The valve system 15 may, for example, consist of four separate butterfly valves, four separate on/off valves or two three-way valves.

Via the four-way valve 19, the regeneration line 10, respectively, the cooling line 16 can be connected to the outlet 13 of the blower 12, respectively to the blow-off opening 18, or vice versa.

To this end, one connection point of the four-way valve 19 is connected to the regeneration line 10, one connection point to the cooling line 16, one connection point to the blow-off opening 18, and one connection point to the outlet 13 of the blower 12.

By switching the four-way valve 19, it is possible to select which of the regeneration line 10 and the cooling line 16 is connected to the outlet 13 of the blower 12 and which to the blow-off opening 18.

Figure 1 shows the situation of a first position of the four-way valve 19, wherein the regeneration line 10 is connected to the outlet 13 of the blower 12.

The device 1 is such that in this position of the four-way valve 19, the ambient air drawn in by the blower 12 can end up in the vessel 6b that is being regenerated via the four-way valve 19, the regeneration line 10 and the second valve block 8b.

Of course, the valve device 7 is hereby appropriately controlled to enable the correct flow path for the ambient air.

Figure 2 shows the situation of a second position of the four-way valve 19, wherein the regeneration line 10 is connected to the blow-off opening 18.

The device 1 is such that, in this position of the four-way valve 19, the ambient air drawn in by the blower 12 can enter, via the four-way valve 19, the cooling line 16 and the first valve block 8a, the vessel 6b which is being cooled.

Also, hereby the valve device 7 is appropriately controlled to allow the correct flow path for the ambient air.

It is also not excluded that, instead of a four-way valve 19, use is made of a valve block with, for example, four valves or of other means which can realize the same configuration as the four-way valve 19.

According to the invention, an additional vessel 20 is incorporated into the regeneration line 10 between the blow-off opening 18 or the blower 12 and the above-mentioned heating means 14.

As can be seen in the figures, the cooling line 16 will connect via said valve system 15 to the regeneration line 10 at a location between the outlet 13 of the blower 12, on the one hand, and said additional vessel 20, on the other hand.

In this additional vessel 20, also a regenerable drying agent is provided.

In this case and preferably, this is a water-resistant drying agent, such as, for example, silica gel or activated aluminium oxide (activated alumina).

This has the advantage that, if condensate should occur in the additional vessel 20, this has no influence or impact on the drying agent.

In this case, the additional vessel 20 is, for example, manufactured by means of extrusion, for example from aluminium. The additional vessel 20 may also be a tube, for example, in particular a steel tube.

Since no compressed gas enters the additional vessel 20, this additional vessel 20 must not be a pressure vessel, but it is not excluded that the additional vessel 20 is a pressure vessel.

Also, in this case, the additional vessel 20 is packed in an insulating material 21 to thermally insulate the additional vessel.

Alternatively, it is also possible to thermally insulate the additional vessel 20 by means of an insulating coating on the inside and/or on the outside of the additional vessel 20.

The internal volume of the additional vessel 20 is preferably smaller than the internal volume of each of the vessels 6a, 6b, whereby also the amount of drying agent in the additional vessel 20 is smaller than the amount of drying agent in one of the vessels 6a, 6b.

Preferably, the internal volume of the additional vessel 20 is at most 1/3, or more preferably 1/4 of the internal volume of one of said two vessels 6a, 6b.

The preferred maximum dimensions of the additional vessel 20 will depend on the expected environmental parameters.

If the relative humidity is 100 %, the internal volume of the additional vessel 20 is preferably 1/3 of the internal volume of said vessels 6a, 6b.

If the relative humidity is 70 %, the internal volume of additional vessel 20 is preferably 1/4 of the internal volume of said vessels 6a, 6b.

In this case, the device 1 is also provided with a temperature sensor 22, configured to measure the temperature at a location between the electric heater 14 and the inlet of the vessel 6a, 6b being regenerated. Note that by 'inlet of the vessel 6a, 6b being regenerated' herein is meant the side of the vessel 6a, 6b where the regeneration gas enters the vessel.

In the example of Figure 1, this temperature sensor 22 is provided in the regeneration line 10, between the electric heating 14 and the second valve block 8b.

This location has the advantage that only one temperature sensor 22 has to be provided. However, it is also possible to alternatively provide a temperature sensor 22 at each said inlet of the vessel 6a, 6b.

In the example of Figure 1, the temperature sensor 22 is arranged between the heating means 14 and the second valve block 8b, but this is not necessary.

Finally, the device 1 in this example is provided with a control unit 23 for controlling the heating means 14 based on the temperature measured by the temperature sensor 22.

To this end, the control unit 1 is connected to the temperature sensor 22 and the heating means 14.

The operation of the drying device 1 is very simple and as follows.

During the operation of the device 1, via the inlet 2 and by means of the appropriate control of the valve device 7, compressed gas to be dried will enter the vessel 6a which is in the process of drying.

In the example of Figures 1 and 2, the left-hand vessel 6a will dry compressed gas.

When passing through this left-hand vessel 6a, the drying agent will extract moisture from the gas.

The dried compressed gas will leave the device 1 via the outlet 3.

By appropriate control of the valve device 7, the correct flow path for the compressed gas to be dried is realized.

The other, in this case the right-hand, vessel 6b, which has already dried gas during a previous cycle or phase, contains moisture and is being regenerated in the meantime.

Use is made herein of a regeneration cycle, which consists in heating ambient air and passing it through the relevant vessel 6b and then blowing it off.

To this end, the four-way valve 19 is switched in the first position, as shown in figure 1.

The blower 12 will draw in ambient air which enters the additional vessel 20 via the four-way valve 19.

Here, the ambient air will be dried and subsequently heated by the heating means 14.

Based on the measured temperature of the ambient air leaving the additional vessel 20, the control unit 23 will control the heating means 10 appropriately such that the ambient air has the desired temperature in order to be able to regenerate the relevant vessel 6b.

The control unit 23 will hereby take into account the fact that the ambient air has been dried, such that the ambient air will be able to dry much more efficiently, such that the temperature does not have to be set so high compared to non-dried ambient air.

The dried, heated ambient air will now be supplied via the second valve block 8b to the right-hand vessel 6b in order to regenerate the drying agent in this vessel 6b.

After passing through the vessel 6b, the drying agent in that vessel 6b will not only be dried but also heated.

The ambient air will then leave the device 1 via the first valve block 8a, the four-way valve 19 and the blow-off opening 18.

Now, the right-hand vessel 6b has been regenerated, meaning that the moisture has been removed from the drying agent and has been heated up.

In order to ensure that this vessel 6b can optimally dry compressed gas during a next cycle or step, it is first cooled.

After all, cold drying agent dries better than hot drying agent.

To this end, the four-way valve 19 is switched to the second position, as shown in figure 2.

The state or position of the valve device 7 is not changed, such that meanwhile the left-hand vessel 6a can still dry compressed gas.

By switching over the four-way valve 19, the ambient air, drawn in by the blower 12, will now reach the vessel 6b via the first valve block 8a and dissipate the heat from this vessel 6b.

Via the second valve block 8b and the heater 14, the now heated ambient air ends up in the additional vessel 20.

Note that the control unit 23 has switched off the heating means 10 at the latest at the start of the cooling.

The heated ambient air will now regenerate the additional vessel 20, meaning that the moisture taken up in the previous step from the ambient air is extracted from the additional vessel 20, and will also heat up the drying agent.

As a result of this process, the right-hand vessel 6b will be cooled and the additional vessel 20 will be regenerated and heated.

Due to the insulation 21 provided, all this heat will be optimally stored in the additional vessel 20.

At the end of this cooling step, the drying agent in the left-hand vessel 6a will be saturated and this vessel will be ready to be regenerated, while the right-hand vessel 6b is now ready to dry compressed gas.

By controlling or switching the valve device 7, it will now be ensured that the compressed gas to be dried ends up in the right-hand vessel 6b to be dried.

Meanwhile, the left-hand vessel 6a will be regenerated in the same manner as in the previous step.

The four-way valve 19 will hereby be returned to the first position, as shown in Figure 1.

The blower 12 will draw in ambient air which will end up in the additional vessel 20.

Here, the ambient air will not only be dried, but also at least partially heated.

As a result, dried and already preheated ambient air will end up in the heating means 14 via the regeneration line 10.

The control unit 23 will control the heating means 14 based on the temperature sensor 22.

Since the ambient air has already been preheated, the heating means 14 will have to be set less high, with the result that the maximum temperature that the heating means 14 must supply, will be less high.

Furthermore, the regeneration and subsequent cooling of this vessel 6a proceeds analogously to that described above for the right-hand vessel 6b.

After cooling the left-hand vessel 6a, the right-hand vessel 6b will be saturated and the vessels can be exchanged again.

The entire cycle then repeats itself from the beginning.

Although in the example shown and described, there are only two vessels 6a, 6b, it cannot be ruled out that there are more than two vessels 6a, 6b, in which case at least one vessel 6a, 6b will always dry compressed gas.

For example, there may be six vessels 6a, 6b, of which three vessels 6a, 6b will dry compressed gas, two vessels 6a, 6b will be regenerated and one vessel 6a, 6b will be cooled.

Although the temperature sensor 22 in the illustrated example is located after the heating means 14, it cannot be ruled out that the temperature sensor 22 is located elsewhere in the regeneration line.

## Claims

1. Regeneration means for regenerating a drying agent in a drying device (1) for compressed gas, which regenerating means (9) comprise a regeneration line (10) connectable to a regeneration inlet (11) of the drying device (1), which regeneration line (10) connects said regeneration inlet (11) to an outlet (13) of a blower (12) for the supply of a regeneration gas, and wherein heating means (14) are provided between the outlet (13) of said blower (12) and the regeneration inlet (11) for heating the regeneration gas, **characterized in that** between the outlet (13) of said blower (12), on the one hand, and said heating means (14), on the other hand, an additional vessel (20) with drying agent is provided for drying the regeneration gas, wherein; said regeneration means further provided with a valve system (15) configured such that it is able to connect the outlet (13) of the blower (12) to a cooling line (16) connected to a cooling inlet (17) of said drying device (1),
wherein said heating means (14) with which the regeneration line (10) is provided, comprise an electric heater (14), steam heater, or a heat exchanger incorporated in the regeneration line (10),
wherein said cooling line (16) connects via said valve system (15) to the regeneration line (10) at a location between the outlet (13) of said blower (12), on the one hand, and said additional vessel (20), on the other hand.

2. Regeneration means according to claim 1,
**characterized in that** the valve system (15) is configured such that the regeneration line (10), respectively the cooling line (16), can connect with the outlet (13) of the blower (12), respectively with a blow-off opening (18), or vice versa.

3. Regeneration means according to any one of the preceding claims, **characterized in that** the valve system (15) comprises one or more of the following:
- four-way valve (19);
- three-way valve;
- butterfly valve;
- on/off valve.

4. Regeneration means according to any one of the preceding claims, **characterized in that** a water-resistant drying agent is arranged in the additional vessel (20).

5. Regeneration means according to any one of the preceding claims, **characterized in that** the additional vessel (20) is manufactured by means of extrusion or a tube.

6. Regeneration means according to any one of the preceding claims, **characterized in that** the additional vessel (20) is thermally insulated.

7. Drying device for drying compressed gas, which drying device (1) is provided with an inlet (2) for compressed gas to be dried and an outlet (3) for dried compressed gas, wherein the device (1) comprises at least two vessels (6a, 6b) containing a regenerable drying agent and a controllable valve device (7) consisting of a first valve block (8a) and a second valve block (8b) connecting said inlet (2) and said outlet (3), respectively, to said vessels (6a, 6b), wherein the controllable valve device (7) is configured such to allow at least one vessel (6a, 6b) compressed gas to dry, while the other vessel (6a, 6b) is being regenerated and cooled, and that by controlling the valve device (7), the vessels (6a, 6b) can each in turn dry compressed gas, **characterized in that** the device (1) is further provided with regeneration means (9) according to one of the preceding claims, wherein the regeneration line (10) is connected to the second valve block (8b) to connect the regeneration line (10) to a regeneration inlet (11) of the drying device (1), wherein the cooling line (16) is connected to the first valve block (8a) to connect the cooling line (16) to a cooling inlet (17) of the drying device (1).

8. Drying device according to claim 7, **characterized in that** the additional vessel (20) has a smaller internal volume than the internal volume of each of said at least two vessels (6a,6b).

9. Drying device according to claim 8, **characterized in that** the internal volume of the additional vessel (20) is at most 1/3, or at most 1/4 of the internal volume of one of said at least two vessels (6a, 6b).

10. Drying device according to any one of the preceding claims, **characterized in that** the device (1) is provided with a temperature sensor (22) at a location between the heating means (14) and the vessel (6a, 6b) that is being regenerated.

11. Drying device according to claim 10, **characterized in that** the drying device (1) is provided with a control unit (23) for controlling the heating means (10) based on the temperature measured by the temperature sensor (22).

## Patentansprüche

1. Regenerationsmittel zum Regenerieren eines Trocknungsmittels in einer Trocknungsvorrichtung (1) für Druckgas, wobei die Regenerationsmittel (9) eine mit einem Regenerationseinlass (11) der Trocknungsvorrichtung (1) verbindbare Regenerationsleitung (10) umfassen, wobei die Regenerationsleitung (10) den Regenerationseinlass (11) mit einem Auslass (13) eines Gebläses (12) zum Zuführen eines Regenerationsgases verbindet, und wobei zwischen dem Auslass (13) des Gebläses (12) und dem Regenerationseinlass (11) Heizmittel (14) zum Erhitzen des Regenerationsgases bereitgestellt sind, **dadurch gekennzeichnet, dass** zwischen dem Auslass (13) des Gebläses (12) einerseits und den Heizmitteln (14) andererseits ein zusätzlicher Behälter (20) mit Trocknungsmittel zum Trocknen des Regenerationsgases bereitgestellt ist, wobei;
die Regenerationsmittel weiter mit einem Ventilsystem (15) bereitgestellt sind, das so konfiguriert ist, dass es in der Lage ist, den Auslass (13) des Gebläses (12) mit einer Kühlleitung (16) zu verbinden, die mit einem Kühleinlass (17) der Trocknungsvorrichtung (1) verbunden ist,
wobei die Heizmittel (14), mit denen die Regenerationsleitung (10) bereitgestellt ist, eine elektrische Heizung (14), eine Dampfheizung oder einen in die Regenerationsleitung (10) integrierten Wärmetauscher umfassen,
wobei die Kühlleitung (16) an einer Stelle zwischen dem Auslass (13) des Gebläses (12) einerseits und dem zusätzlichen Behälter (20) andererseits über das Ventilsystem (15) mit der Regenerationsleitung (10) verbindet.

2. Regenerationsmittel nach Anspruch 1, **dadurch gekennzeichnet, dass** das Ventilsystem (15) so konfiguriert ist, dass die Regenerationsleitung (10) bzw. die Kühlleitung (16) mit dem Auslass (13) des Gebläses (12) bzw. mit einer Ausblasöffnung (18) oder umgekehrt verbinden kann.

3. Regenerationsvorrichtung nach einem der vorstehenden Ansprüche, **dadurch gekennzeichnet, dass** das Ventilsystem (15) eines oder mehrere der folgenden umfasst:
- Vierwegeventil (19);
- Dreiwegeventil;
- Drosselventil;
- Ein-/Aus-Ventil.

4. Regenerationsvorrichtung nach einem der vorstehenden Ansprüche, **dadurch gekennzeichnet, dass** ein wasserbeständiges Trocknungsmittel in dem zusätzlichen Behälter (20) angeordnet ist.

5. Regenerationsvorrichtung nach einem der vorstehenden Ansprüche, **dadurch gekennzeichnet, dass** der zusätzliche Behälter (20) mittels Extrusion oder aus einem Rohr hergestellt ist.

6. Regenerationsvorrichtung nach einem der vorstehenden Ansprüche, **dadurch gekennzeichnet, dass** der zusätzliche Behälter (20) thermisch isoliert ist.

7. Trocknungsvorrichtung zum Trocknen von Druckgas, wobei die Trocknungsvorrichtung (1) mit einem Einlass (2) für zu trocknendes Druckgas und einem Auslass (3) für getrocknetes Druckgas bereitgestellt ist, wobei die Vorrichtung (1) mindestens zwei Behälter (6a, 6b), die ein regenerierbares Trocknungsmittel enthalten, und eine steuerbare Ventilvorrichtung (7) umfasst, die aus einem ersten Ventilblock (8a) und einem zweiten Ventilblock (8b) besteht, die den Einlass (2) bzw. den Auslass (3) mit den Behältern (6a, 6b) verbinden, wobei die steuerbare Ventilvorrichtung (7) so konfiguriert ist, zu ermöglichen, dass mindestens ein Behälter (6a, 6b) Druckgas trocknet, während der andere Behälter (6a, 6b) regeneriert und gekühlt wird, und dass durch Steuern der Ventilvorrichtung (7) die Behälter (6a, 6b) jeweils abwechselnd Druckgas trocknen können, **dadurch gekennzeichnet, dass** die Vorrichtung (1) weiter mit Regenerationsmitteln (9) nach einem der vorstehenden Ansprüche bereitgestellt ist, wobei die Regenerationsleitung (10) mit dem zweiten Ventilblock (8b) verbunden ist, um die Regenerationsleitung (10) mit einem Regenerationseinlass (11) der Trocknungsvorrichtung (1) zu verbinden, wobei die Kühlleitung (16) mit dem ersten Ventilblock (8a) verbunden ist, um die Kühlleitung (16) mit einem Kühleinlass (17) der Trocknungsvorrichtung (1) zu verbinden.

8. Trocknungsvorrichtung nach Anspruch 7, **dadurch gekennzeichnet, dass** der zusätzliche Behälter (20) ein kleineres Innenvolumen als das Innenvolumen jedes der mindestens zwei Behälter (6a, 6b) aufweist.

9. Trocknungsvorrichtung nach Anspruch 8, **dadurch gekennzeichnet, dass** das Innenvolumen des zusätzlichen Behälters (20) höchstens 1/3 oder höchstens 1/4 des Innenvolumens eines der mindestens zwei Behälter (6a, 6b) beträgt.

10. Trocknungsvorrichtung nach einem der vorstehenden Ansprüche, **dadurch gekennzeichnet, dass** die Vorrichtung (1) an einer Stelle zwischen den Heizmitteln (14) und dem Behälter (6a, 6b), der regeneriert wird, mit einem Temperatursensor (22) bereitgestellt ist.

11. Trocknungsvorrichtung nach Anspruch 10, **dadurch gekennzeichnet, dass** die Trocknungsvorrichtung (1) mit einer Steuereinheit (23) zum Steuern der Heizmittel (10) basierend auf der vom Temperatursensor (22) gemessenen Temperatur bereitgestellt ist.

## Revendications

1. Moyens de régénération destinés à la régénération d'un agent desséchant dans un dispositif de séchage (1) destiné à un gaz comprimé, dans lequel lesdits moyens de régénération (9) comprennent une ligne de régénération (10) qui peut être raccordée à une entrée de régénération (11) du dispositif de séchage (1) ; dans lequel ladite ligne de régénération (10) raccorde ladite entrée de régénération (11) à une sortie (13) d'une soufflante (12) pour l'alimentation d'un gaz de régénération ; et dans lequel des moyens de chauffage (14) sont prévus entre la sortie (13) de ladite soufflante (12) et l'entrée de régénération (11) afin de chauffer le gaz de régénération ; **caractérisés en ce que**, entre la sortie (13) de ladite soufflante (12), d'une part, et lesdits moyens de chauffage (14), d'autre part, on prévoit un récipient supplémentaire (20) qui comprend un agent desséchant pour le séchage du gaz de régénération ; dans lequel lesdits moyens de régénération sont en outre équipés d'un système de valves (15) qui est configuré d'une manière telle qu'il est capable de raccorder la sortie (13) de la soufflante (12) à une ligne de refroidissement (16) qui est raccordée à une entrée de refroidissement (17) dudit dispositif de séchage (1) ;
dans lequel lesdits moyens de chauffage (14), avec lesquels on prévoit la ligne de régénération (10), comprennent un dispositif de chauffage électrique (14), un dispositif de chauffage à vapeur ou un échangeur de chaleur qui est incorporé dans un gaz de régénération (10) ;
dans lequel ladite ligne de refroidissement (16) se raccorde, par l'intermédiaire dudit système de valves (15), à la ligne de régénération (10) à un endroit qui est situé entre la sortie (13) de ladite soufflante (12), d'une part, et ledit récipient supplémentaire (20), d'autre part.

2. Moyens de régénération selon la revendication 1, **caractérisés en ce que** le système de valves (15) est configuré d'une manière telle que la ligne de régénération (10), respectivement la ligne de refroidissement (16) peut se raccorder à la sortie (13) de la soufflante (12), respectivement à une ouverture d'échappement (18), ou vice versa.

3. Moyens de régénération selon l'une quelconque des revendications précédentes, **caractérisés en ce que** le système de valves (15) comprend un ou plusieurs éléments repris ci-après, à savoir :
- une vanne (19) du type à quatre voies ;
- une vanne du type à trois voies ;
- une vanne du type à papillon ;
- une vanne d'ouverture/fermeture.

4. Moyens de régénération selon l'une quelconque des revendications précédentes, **caractérisés en ce que** l'on dispose un agent desséchant qui résiste à l'eau dans le récipient supplémentaire (20).

5. Moyens de régénération selon l'une quelconque des revendications précédentes, **caractérisés en ce que** le récipient supplémentaire (20) est fabriqué au moyen d'une extrusion ou est réalisé sous la forme d'un tube.

6. Moyens de régénération selon l'une quelconque des revendications précédentes, **caractérisés en ce que** le récipient supplémentaire (20) est doté d'une isolation thermique.

7. Dispositif de séchage destiné au séchage d'un gaz comprimé ; dans lequel ledit dispositif de séchage (1) est équipé d'une entrée (2) pour le gaz comprimé qui doit être séché et d'une sortie (3) pour le gaz comprimé qui a été séché ; dans lequel le dispositif (1) comprend au moins deux récipients (6a, 6b) qui contiennent un agent de séchage qui peut être régénéré, ainsi qu'un dispositif réglable faisant office de vanne (7) qui est constitué par un premier bloc de vannes (8) et par un deuxième bloc de vannes (8) qui relient ladite entrée (2) et ladite sortie (3), respectivement, auxdits récipients (6a, 6b) ; dans lequel le dispositif réglable faisant office de vanne (7) est configuré d'une façon telle qu'il permet à au moins un récipient (6a, 6b) de sécher le gaz comprimé, tandis que l'autre récipient (6a, 6b) est en train d'être régénéré et refroidi ; et en ce que, par le biais du réglage du dispositif faisant office de vanne (7), les récipients (6a, 6b) peuvent chacun à leur tour sécher le gaz comprimé ; **caractérisé en ce que** le dispositif (1) est en outre équipé de moyens de régénération (9) en conformité avec l'une quelconque des revendications précédentes ; dans lequel la ligne de régénération (10) est raccordée au deuxième bloc de vannes (8b) afin de raccorder la ligne de régénération (10) à une entrée de régénération (11) du dispositif de séchage (1) ; dans lequel la ligne de refroidissement (16) est raccordée au premier bloc de vannes (8a) afin de raccorder la ligne de refroidissement (16) à une entrée de refroidissement (17) du dispositif de séchage (1).

8. Dispositif de séchage selon la revendication 7, **caractérisé en ce que** le récipient supplémentaire (20) possède un volume interne qui est inférieur au volume interne de chacun desdits au moins deux récipients (6a, 6b).

9. Dispositif de séchage selon la revendication 8, **caractérisé en ce que** le volume interne du récipient supplémentaire (20) représente au maximum 1/3, ou au maximum 1/4 du volume interne d'un desdits au moins deux récipients (6a, 6b).

10. Dispositif de séchage selon l'une quelconque des revendications précédentes, **caractérisé en ce que** le dispositif (1) est équipé d'un capteur de la température (22) qui est disposé à un endroit situé entre les moyens de chauffage (14) et le récipient (6a, 6b) qui est en cours de régénération.

11. Dispositif de séchage selon la revendication 10, **caractérisé en ce que** le dispositif séchage (1) est équipé d'une unité de commande (23) qui est destinée à commander les moyens de chauffage (10) en se basant sur la température qui a été mesurée par l'intermédiaire du capteur de la température (22).
